# FASCICULE DE BREVET EUROPEEN

(11) **EP 1 332 265 B1**
(45) Date de publication et mention de la délivrance du brevet: **31.08.2011**
(21) Numéro de dépôt: 01993741.6
(22) Date de dépôt: 09.11.2001
(51) Int. Cl.: E06B 3/54

(54) **ELEMENT D'ASSEMBLAGE A INSERER DANS UN ALESAGE**
BAUGRUPPE ZUM EINFÜHREN IN EIN BOHRLOCH
ASSEMBLY ELEMENT TO BE INSERTED IN A BORE

(30) Priorité: 11.11.2000 DE 10055983; 20.12.2000 DE 10063547
(43) Date de publication de la demande: 06.08.2003
(73) Titulaire: SAINT-GOBAIN GLASS FRANCE, 92400 Courbevoie (FR)
(72) Inventeur: ECKELT, Christian, A-4400 Steyr (AT); LEOPOLDSEDER, Roland, A-4300 St-Valentin (AT); HERMENS, Ulrich, D-52078 Aachen (DE); MEISSNER, Matthias, D-52070 Aachen (DE)
(74) Mandataire: Muller, René
(86) Numéro de dépôt international: PCT/FR2001/003510
(87) Numéro de publication internationale: WO 2002/038902

(56) Documents cités:
- EP-A- 0 655 543
- EP-A- 0 965 721
- WO-A-96/22443
- DE-C- 4 311 442
- DE-C- 19 858 527
- DE-U- 29 921 128
- FR-A- 2 732 730

## Description

L'invention se rapporte à un élément d'assemblage à insérer dans un alésage, qui est prévu en particulier comme un alésage traversant dans une plaque, par exemple une plaque de verre, du type comportant au moins un élément de compensation extérieur et intérieur, dans lequel l'élément de compensation extérieur est prévu pour transmettre des efforts à la surface intérieure du trou de l'alésage et l'élément de compensation intérieur peut être inséré en ajustement serré dans un alésage disposé de façon excentrique dans l'élément de compensation extérieur et est prévu pour positionner l'axe longitudinal d'un élément de fixation à l'intérieur de alésage traversant.

Un système de fixation connu pour des doubles vitrages (EP-B1 0 506 522) permet la compensation d'écarts centraux d'alésages préfabriqués, placés en alignement avant l'assemblage des deux vitres, à l'aide de deux anneaux excentriques s'adaptant l'un dans l'autre. Ainsi, on est censé atteindre une transmission aussi uniforme que possible de la charge des deux vitres à un élément de fixation en forme de tige. La position d'un alésage dans la vitre extérieure est considérée comme la base de référence, tandis que les anneaux excentriques sont insérés en tant que pièces de compensation dans le trou de la vitre intérieure, afin de compenser un éventuel écart transversal de ce trou par rapport au centre de l'alésage réalisé dans la vitre extérieure. Le résultat est que l'alésage de l'anneau excentrique intérieur est coaxial à alésage réalisé dans la vitre extérieure. Si l'élément de fixation est inséré une seule fois, alors les deux anneaux excentriques ne peuvent plus tourner l'un par rapport à l'autre. Ils ne sont cependant pas fixés séparément l'un à l'autre ou à la vitre.

Un système de fixation connu pour des plaques (DE-A1-198 39 419) comprend des pièces de compensation avec un alésage excentré, qui peuvent être insérées dans des ouvertures de réception d'une ossature. Grâce à différentes positions angulaires des pièces de compensation dans les ouvertures de réception, il est possible de compenser des écarts dimensionnels entre la position des ouvertures de réception et la position d'alésages dans les plaques à fixer.

Le document DE-A1 41 30 823 décrit une vitre munie d'un élément de fixation en plusieurs parties, qui comprend une douille élastique qui peut être comprimée axialement entre deux vitres en serrant des vis. Cette dernière entoure un noyau métallique qui peut être assemblé, par des boulons à visser ou analogues, à une ossature qui doit porter les vitres. En serrant les vis, la douille élastique se dilate radialement et assure ainsi un assemblage indéformable et indesserrable du noyau avec la vitre, uniquement par les efforts de pression axiaux exercés sur la face intérieure du trou. Cet élément de fixation est utilisable indifféremment pour des vitres monolithiques et pour des vitres feuilletées.

Des moyens de fixation ou d'assemblage de ce type sont utilisés principalement pour des vitrages de façades de grande étendue, pour assembler les plaques de verre à une ossature qui les porte. Parfois, des plaques de verre posées dans un même plan doivent cependant être assemblées les unes aux autres par leurs bords. Un cas d'application à cet égard concerne les éléments de renforcement pour des façades vitrées, qui sont réalisés sous la forme de hautes poutres élancées (dites épines de verre ou contreventements en verre) et qui sont réunis solidement en de grandes longueurs à partir de plusieurs plaques de verre feuilletées situées en alignement. Dans les régions de bord, respectivement d'assemblage, on utilise le plus souvent des pattes ou des plaques de serrage placées à l'extérieur, parfois aussi des ferrures insérées entre plusieurs vitres d'une plaque de verre (feuilletée). Celles-ci sont le plus souvent fixées au moyen d'éléments de maintien en forme de tiges comme des boulons ou des vis, qui traversent les plaques.

Même dans ces cas d'application, les plaques de verre doivent être garnies d'éléments d'assemblage aptes au passage de boulons/vis. Ceux-ci doivent d'une part garantir un maintien sûr des pattes, respectivement des ferrures, éventuellement empêcher le contact direct entre le verre et le métal, et d'autre part positionner les alésages nécessaires, respectivement leurs axes centraux, aussi exactement que possible dans la face de la plaque par rapport aux bords de celle-ci. Des écarts dimensionnels dans les ferrures elles-mêmes sont relativement négligeables.

Par la pratique, on connaît des méthodes dans lesquelles les pièces détachées des éléments d'assemblage doivent être malaisément assemblées sur le chantier et positionnées dans l'alésage de la plaque. Elles sont ensuite scellées sur la face intérieure du trou à l'aide de masses liquides, ou pâteuses.

Il existe ainsi un grand besoin d'assemblages agissant sur la paroi intérieure de trous pour des plaques, notamment de verre feuilleté, qui soient préfabriquées en usine avec des tolérances de position aussi faibles que possible, afin que les plaques puissent être jointes les unes aux autres de façon simple et rapide sur le chantier. Par la préfabrication en usine des plaques garnies des éléments d'assemblage, il est possible de garantir une qualité et une sécurité des assemblages aussi grandes que possible, dans des conditions reproductibles. En même temps, il est possible d'assurer une fabrication industrielle et donc économique.

Pour la réalisation d'assemblages agissant sur la paroi intérieure de trous, la préférence va à une liaison de l'élément d'assemblage inséré dans un alésage de la plaque de verre avec transmission de force (notamment par serrage) avec la surface latérale de ce même alésage. On sait cependant qu'il est pratiquement impossible, déjà lors de la réalisation d'alésages traversants dans un verre feuilleté, d'aligner exactement les alésages dans les différentes plaques de verre. Au contraire, on doit toujours compenser des écarts dimensionnels, respectivement des tolérances, qui apparaissent sur les diamètres des alésages, sur la position de ceux-ci dans les faces des plaques assemblées et finalement, même si c'est dans une moindre mesure, sur les éléments d'assemblage à insérer eux-mêmes. Ceci exige un procédé de fabrication rationnel et techniquement impeccable lors de la fixation des éléments d'assemblage dans les alésages des plaques.

En particulier lors de l'assemblage de vitres feuilletées, entre autres, à des ferrures ou à une structure porteuse (il faut quelquefois aussi assembler l'une à l'autre, bord à bord, des plaques feuilletées situées dans un même alignement), à la différence des plaques monolithiques, on ne peut utiliser aucun des assemblages vissés usuels, dans lesquels on pratique un ou plusieurs trous et on serre l'une sur l'autre, au moyen d'un assemblage vissé traversant le trou, deux pièces de serrage étant en prise sur les faces extérieures des plaques. Dans des vitres feuilletées, il peut se produire un fluage de la couche de liaison organique, notamment sous l'action des efforts de serrage. La vitre feuilletée se déforme, son épaisseur diminue et l'assemblage vissé se desserre. Il faut donc prendre des mesures pour empêcher ce phénomène.

Par le document DE 198 12 814 A1, on connaît une vitre feuilletée pourvue d'une attache de poutre de verre pour l'assemblage par serrage à une structure portante ou à d'autres plaques de verre. L'attache de poutre de verre se compose d'un trou pratiqué dans les vitres individuelles de la vitre feuilletée ainsi que d'une résine de moulage introduite dans celui-ci et d'un manchon recouvrant celle-ci. Extérieurement sur le verre s'appliquent des rondelles annulaires vissées l'une à l'autre, des rondelles d'étanchéité étant disposées entre les rondelles annulaires et les surfaces de verre. Intérieurement sur le manchon s'applique, selon l'enseignement de la DE 198 12 814 A1, une paire de douilles vissées l'une dans l'autre, les rondelles annulaires sont assemblées par serrage aux extrémités respectives des douilles. Etant donné que la résine de moulage liquide est versée dans l'espace creux entre le manchon et le trou, le montage des pièces individuelles n'est possible que dans la position couchée des plaques de verre. Par ailleurs, il faut veiller soigneusement, lors de la fabrication de cette attache de poutre de verre, à remplir complètement l'espace creux, parce que la résine de moulage transmet les efforts aux vitres. De plus, des efforts de serrage sont également exercés, dans une certaine mesure, sur les couches de liaison.

On connaît de DE-1 99 01 513 une ferure pour un élément vitré en verre feuileté à monter sans cadre, qui est fixée à une seule des deux feuilles individuelles du feuilleté au moyen d'un assemblage serré. Ainsi toute mise en charge de la couche adhésive du feuilleté par des forces de serrage est evitée.

L'invention a pour objet de développer un élément d'assemblage perfectionné et aussi d'indiquer un procédé pour l'insertion de l'élément d'assemblage dans l'alésage d'une plaque.

En ce qui concerne l'élément d'assemblage, cet objectif est atteint, conformément à l'invention, par les caractéristiques de la revendication 1. Les caractéristiques des revendications 11, 12 et 13 se rapportent à des plaques équipées d'au moins un élément d'assemblage conforme à l'invention et à un assemblage de telles plaques. Les revendications 14 à 16 indiquent un procédé préféré pour l'insertion de l'élément d'assemblage dans une plaque.

Les caractéristiques des revendications secondaires respectivement reliées aux revendications indépendantes proposent des perfectionnements avantageux de celles-ci.

Il est proposé dans une première forme de réalisation un élément d'assemblage en plastique et/ou métal, adaptable exactement aux dimensions de l'alésage respectif dans la plaque (diamètre, longueur ou profondeur), respectivement à l'épaisseur de la plaque et insérable dans l'alésage avec une dimension radiale moindre, qui comprend en premier lieu deux éléments de compensation s'adaptant l'un dans l'autre, au moins un de ces éléments de compensation comportant un alésage disposé de façon excentrée, ou excentrique.

L'élément d'assemblage a en gros la fonction de positionner dans une position prédéterminée, à l'intérieur de l'alésage de la plaque, l'axe longitudinal d'un élément de fixation en forme de tige, en particulier d'un boulon de maintien.

Après le positionnement correct dudit axe longitudinal, chaque élément d'assemblage composé plaque est fixé de façon définitivement indémontable dans l'alésage correspondant de la en y versant un agent de scellement.

L'alésage de la plaque ne doit pas nécessairement être un alésage traversant. Au contraire, un alésage borgne peut aussi, pour certains cas d'application, être garni d'un élément d'assemblage inséré du type décrit ici. Dans ce cas, l'élément de fixation en forme de tige associé peut naturellement ne sortir que d'une seule face principale de la plaque. Pour des plaques relativement épaisses, deux trous borgnes disposés exactement l'un en face de l'autre pourraient cependant aussi être garnis de la façon décrite ici. Un alésage de support de l'élément de compensation intérieur peut dans ces cas d'application être également réalisé sous la forme d'un alésage borgne.

Dans une variante avantageuse, les deux éléments de compensation sont en outre pourvus de canaux au moins tangents au joint de séparation entre les deux éléments de compensation, et à travers lesquels l'agent de scellement pâteux, coulant et durcissable peut être versé ou pressé, pour verrouiller aussi les deux éléments de compensation l'un à l'autre après son durcissement. L'agent de scellement atteint ainsi deux objectifs différents: d'une part il bloque l'ensemble de l'élément d'assemblage composé par rapport à la face intérieure du trou et d'autre part il fixe intérieurement l'une à l'autre les deux parties de l'élément d'assemblage.

Le diamètre extérieur de l'élément de compensation intérieur correspond aussi exactement que possible au diamètre de l'alésage excentré de l'élément de compensation extérieur. On empêche ainsi largement que l'agent de scellement quitte les canaux, qui doivent emprunter ou au moins toucher le joint de séparation entre les deux éléments de compensation.

Dans une forme de réalisation préférée, les deux éléments de compensation ont la forme d'une douille et sont pourvus d'alésages excentriques. Dans l'alésage de l'élément de compensation intérieur, à considérer comme l'alésage de support, on peut insérer des boulons ou des vis avec un faible jeu radial.

Dans une autre forme de réalisation, seul l'élément de compensation extérieur en forme d'une douille est pourvu d'un alésage excentrique, tandis que l'élément de compensation intérieur qui s'adapte dans cet alésage est solidement assemblé à des tourillons saillants - au moins d'un côté, de préférence des deux côtés - dont l'axe longitudinal est disposé de façon excentrique par rapport à l'axe longitudinal de l'élément de compensation intérieur, et qui forment eux-mêmes un élément de fixation en forme de tige. Des combinaisons des deux variantes sont également possibles, avec un tourillon saillant d'un côté et un alésage de support prévu de l'autre côté, qui dans ce cas sera réalisé sous la forme d'un alésage borgne.

Avec les deux configurations, on peut compenser une large gamme d'écarts dimensionnels. Des tolérances de position des alésages dans les plaques ainsi que le cas échéant des écarts dimensionnels des plaques elles-mêmes sont compensés à l'intérieur de larges limites, du fait que les deux éléments de compensation pouvant tourner l'un par rapport à l'autre sont insérés dans l'alésage de la plaque - à l'aide d'un dispositif ou d'un gabarit adéquat - et provisoirement fixés d'une manière telle que l'axe central de l'alésage de support, respectivement des tourillons saillants de l'élément de compensation intérieur, se trouve avant l'introduction de l'agent de scellement dans la position visée, qui est en règle générale définie par sa distance à un ou plusieurs côtés de référence de la plaque.

S'il est prévu un alésage de support dans l'élément de compensation intérieur, alors son axe central est avantageusement positionné au moyen d'un tourillon auxiliaire faisant partie du dispositif, qui remplit largement l'alésage de support et empêche la pénétration d'agent de scellement dans l'alésage de support. Un tel dispositif peut être conçu pour l'insertion simultanée de plusieurs éléments d'assemblage conformes à invention dans une plaque; il comprendra alors un nombre correspondant de tourillons auxiliaires.

Si l'élément de compensation intérieur est pourvu de tourillons saillants, alors le dispositif de montage comprendra au moins un évidement correspondant au diamètre du tourillon saillant, dans lequel celui-ci peut être inséré tout en pouvant tourner. Cette réalisation peut certes réduire le nombre des pièces pour l'assemblage, elle augmente cependant l'encombrement des plaques au transport, par exemple de l'usine au chantier, parce que les tourillons sortent de la face principale de celles-ci.

Dans une réalisation préférée, les deux éléments de compensation sont dès lors de forme cylindrique avec des faces d'extrémité ou frontales planes, dans lesquelles débouchent les alésages traversants excentrés respectifs. De préférence, les deux éléments de compensation ont également la même longueur et ils sont adaptés à l'épaisseur de la plaque respective, d'une façon telle qu'ils ne sortent pas au-delà des faces de la plaque après leur insertion dans l'alésage traversant de la plaque. Selon les possibilités, les faces frontales des éléments de compensation doivent affleurer aux surfaces de la plaque.

Les éléments de compensation peuvent se composer de métal et/ou de plastiques adéquats. Le cas échéant, l'élément de compensation intérieur, qui ne vient pas en contact avec la plaque (de verre), peut se composer de métal et l'élément de compensation extérieur de plastique. Ceci sera le cas en particulier lorsque l'élément de compensation intérieur forme un ensemble unitaire avec l'élément de fixation en forme de tige, même si l'on peut aussi imaginer ici un ensemble composé d'une matière métallique pour le tourillon et d'une matière plastique pour l'élément de compensation proprement dit.

De préférence, les canaux débouchent dans la surface latérale de l'élément de compensation extérieur. Suivant une forme de réalisation, au moins deux alésages radiaux sont ménagés dans la surface latérale de l'élément de compensation extérieur à proximité des faces frontales de celui-ci. Ceux-ci forment également des canaux, qui relient la surface latérale de l'élément de compensation extérieur avec l'alésage excentrique de celui-ci. L'élément de compensation extérieur est en outre réalisé avec une dimension radiale plus faible au moins par rapport aux régions de sortie de l'alésage de la plaque. Par conséquent, il subsiste entre sa surface latérale et la face intérieure du trou une fente annulaire qui peut être remplie avec l'agent de scellement, et qui permet la pénétration de l'agent de scellement de l'extérieur dans l'alésage radial associé et aussi dans les canaux associés de l'élément de compensation intérieur.

A cet effet, on a façonné dans la surface latérale de l'élément de compensation intérieur essentiellement cylindrique au moins un canal qui relie fluidiquement l'un à l'autre les deux alésages radiaux dans l'élément de compensation extérieur.

Dans une forme de réalisation préférée des canaux, deux rainures annulaires sont disposées dans la surface latérale de l'élément de compensation intérieur, à proximité de ses faces frontales planes, d'une façon telle qu'elles soient toutes deux recouvertes par l'élément de compensation extérieur et qu'elles communiquent avec lesdits alésages radiaux. Ainsi est assurée la communication fluidique entre les alésages radiaux et les canaux, pour toute position angulaire des deux éléments de compensation pouvant tourner l'un par rapport à l'autre. En outre, on a façonné au moins une rainure supplémentaire, reliant les deux rainures annulaires, qui s'étend de préférence parallèlement à l'axe longitudinal de l'élément de compensation.

Dans une variante, toute la surface latérale de l'élément de compensation intérieur pourrait même être entaillée dans une certaine mesure tout autour dans la région entre les deux rainures annulaires, respectivement entre les alésages radiaux, de sorte qu'il en résulte globalement un canal annulaire plat, qui relie les alésages radiaux, au moins au nombre de deux, de l'élément de compensation extérieur.

Les formes des sections transversales de ces rainures sont en principe quelconques, elles devraient cependant être choisies et dimensionnées de façon telle que l'agent de scellement puisse s'y écouler ou y être pressé avec une faible résistance à l'écoulement. Du point de vue de la technique de fabrication, une section transversale semi-circulaire des rainures peut être un avantage.

Cette configuration présente au total l'avantage que l'agent de scellement parvient, indépendamment de la position angulaire réciproque des deux éléments de compensation, sûrement par l'alésage de remplissage et la rainure annulaire communiquant directement avec celui-ci, dans la rainure orientée longitudinalement et de là dans la seconde rainure annulaire et dans le second alésage, d'où il s'écoute finalement dans la fente annulaire située de l'autre côté entre l'élément d'assemblage et la face intérieure du trou. On peut même introduire l'agent de scellement exclusivement par un côté et néanmoins obtenir un remplissage total, sur les deux côtés, des espaces creux disponibles.

Un autre avantage est que les faces frontales des deux éléments de compensation peuvent être parfaitement lisses, sans orifices de sortie d'alésages ou analogues. En particulier, on peut soit y éviter totalement toutes traces de l'agent de scellement, soit en tous cas les enlever simplement.

Dans une variante de la configuration des canaux, ceux-ci pourraient cependant aussi déboucher dans les faces frontales de l'élément d'assemblage. Le cas échéant, ces orifices de sortie pourraient même se situer dans le joint de séparation lui-même. Pourtant, il doit être chaque fois prévu au moins un canal de communication avec la surface latérale de l'élément de compensation extérieur à proximité des faces frontales de celui-ci, afin que les fentes annulaires vers la surface intérieure du trou de l'alésage traversant soient également remplies avec l'agent de scellement introduit par les canaux.

Selon encore une autre variante, un réseau de canaux pourrait être prévu pratiquement uniquement dans la surface intérieure de l'alésage de élément de compensation extérieur, la surface latérale de l'élément de compensation intérieur étant cependant pourvue d'une certaine rugosité, de dents, de sillons ou analogues, au moins dans une région distante des faces frontales de celui-ci. Dans une telle configuration, le joint de séparation entre les deux éléments n'est que simplement touché en pratique par le réseau de canaux. Si l'agent de scellement est à présent pressé à travers le réseau de canaux, il remplit aussi cette rugosité, ces dents, etc. Après son durcissement, il se forme aussi un verrouillage par épousement de forme des deux éléments de compensation l'un à l'autre. Bien entendu, on peut aussi réaliser l'inverse de cette disposition, en prévoyant le réseau de canaux uniquement dans la surface latérale de l'élément de compensation intérieur et la rugosité, etc. uniquement dans la surface intérieure du trou de l'élément de compensation extérieur.

Spécialement pour l'emploi de tels éléments d'assemblage dans des alésages borgnes, on peut également proposer un tracé des canaux dans lequel aussi bien l'entrée que la sortie de l'agent de scellement soit possible dans la région de l'orifice de sortie de l'alésage borgne. Par exemple, l'agent de scellement pourrait, après le remplissage de la fente annulaire à l'orifice de sortie, s'écouler jusqu'au fond d'abord à travers un premier canal longitudinal sensiblement parallèlement à l'axe longitudinal de l'alésage borgne le long du joint de séparation. Un espace creux subsistant par exemple entre l'extrémité intérieurement placée de l'élément d'assemblage et le fond de l'alésage borgne peut être rempli avec l'agent de scellement, si ledit canal longitudinal débouche dans cette région. L'on pourrait prévoir un second canal longitudinal, à travers lequel l'agent de scellement pourrait à nouveau refluer vers l'orifice d'échappement d'air ou de sortie. Ce dernier serait de préférence situé dans la face frontale de l'élément d'assemblage.

La pénétration d'agent de scellement dans un alésage de support de l'élément de compensation intérieur serait à nouveau empêchée par un tourillon auxiliaire du dispositif de montage remplissant celui-ci ou aussi par la réalisation de l'alésage de support lui-même sous la forme d'un alésage borgne. S'il n'existe avec une telle configuration des canaux, aucun besoin de remplir un espace creux au fond de l'alésage borgne dans la plaque, alors l'agent de scellement pourrait être dévié, encore à l'intérieur de l'élément d'assemblage, entre les deux canaux longitudinaux aussi par une rainure annulaire ou analogue.

Dans une variante plus simple encore, le verrouillage réciproque des deux éléments de compensation pourrait aussi être obtenu par le remplissage avec l'agent de scellement d'un simple canal annulaire s'étendant entre deux ouvertures ou deux alésages radiaux opposé(e)s l'un(e) à l'autre, qui se situe dans le joint de séparation des deux éléments de compensation, si l'on atteint aussi de cette façon une sécurité suffisante contre la rotation.

Naturellement, les configurations de canaux discutées en dernier lieu pourraient aussi être utilisées en cas d'insertion d'éléments d'assemblage dans des alésages traversants, s'il est sûr que toutes les fentes annulaires entre la surface intérieure du trou et l'élément de compensation extérieur peuvent être entièrement remplies à partir d'un seul côté de sortie de l'alésage traversant.

Le dispositif de montage déjà mentionné comprendra aussi, outre le (les) tourillon(s) auxiliaire(s), des éléments d'étanchéité qui sont aptes à obturer vers l'extérieur la région des sorties des alésages traversants dans la plaque en formant des surfaces planes en alignement avec les faces de la plaque. Au moins un des éléments d'étanchéité doit comporter une ouverture de remplissage, par laquelle l'agent de scellement peut être versé ou pressé. L'élément d'étanchéité situé en face devrait être pourvu d'une ouverture d'échappement d'air (ou de dégazage), par laquelle l'air chassé des espaces creux par l'agent de scellement introduit sous pression peut s'échapper. S'il sort finalement de l'agent de scellement par l'ouverture d'échappement, alors les espaces creux sont entièrement remplis. Si les ouvertures d'entrée et de sortie pour l'agent de scellement se trouvent sur le même côté de l'élément d'assemblage, alors une ouverture d'échappement d'air dans le second élément d'étanchéité peut naturellement être supprimée. Pour l'insertion d'éléments d'assemblage dans des alésages borgnes de la plaque, il ne faudrait naturellement qu'un seul élément d'étanchéité dans la région de l'orifice de sortie de l'alésage borgne, qui pourrait alors aussi empêcher l'expulsion de l'élément d'assemblage sous la pression éventuelle de l'agent de scellement depuis le fond du trou.

Dans le mode de réalisation de l'élément d'assemblage pour vitre feuilletée, des éléments rapportés fixés indépendamment les uns des autres, avec des alésages traversants, sont appliqués sur les deux vitres extérieures de la vitre feuilletée. Ceux-ci peuvent déjà être appliqués avant l'assemblage des vitres individuelles, par exemple au moyen d'assemblages vissés séparés, dont les écrous peuvent trouver place dans l'espace creux formé par les trous dans les vitres intérieures. Les vis associées présentent des trous traversants, elles sont donc réalisées en forme de douilles.

Les éléments rapportés peuvent cependant aussi être fixés dans les trous par d'autres moyens, par exemple par collage, moulage, ou y être calés par déformation plastique.

Etant donné que les trous percés dans les vitres individuelles des vitres feuilletées sont pratiqués chacun séparément, des écarts axiaux des centres des trous après la fabrication de la vitre feuilletée sont inévitables. Au lieu de coûteuses mesures de positionnement, on emploie, comme moyens d'alignement des alésages traversants des éléments rapportés, de préférence des rondelles ou des bagues avec des alésages excentriques à insérer dans ceux-ci. Cela signifie que les alésages traversants présentent des diamètres plus grands que les éléments d'assemblage à insérer. En principe, il peut cependant suffire de ne prévoir une compensation des écarts des centres des trous que dans une des pièces rapportées. On pourrait par exemple considérer un des alésages traversants comme "position normale". L'alésage traversant de l'autre élément rapporté devrait être suffisamment grand pour qu'une bague excentrique puisse y être insérée comme compensation des centres des alésages. L'alésage de la bague excentrique devrait avoir le même diamètre que le plus petit alésage traversant.

Dans une forme de réalisation préférée, des écarts des centres de trou des alésages traversants sont cependant compensés à l'aide de paires de bagues excentriques ajustées dans l'alésage traversant respectif. Les bagues excentriques possèdent un diamètre extérieur circulaire et un alésage décentré ou excentré, le diamètre extérieur de la plus petite bague excentrique de la paire correspondant au diamètre de l'alésage décentré pratiqué dans la plus grande bague excentrique. Les alésages décentrés des petites bagues excentriques peuvent être amenés en alignement précis l'un par rapport à l'autre par une simple rotation des bagues excentriques de la paire. La disposition d'ensemble dans le trou de la vitre feuilletée forme alors un coussinet d'appui pour l'insertion de l'élément de fixation en forme de tige, par exemple un boulon à visser.

L'élément de fixation en forme de tige peut y être logé directement ou même indirectement en utilisant une douille de montage s'étendant entre les surfaces extérieures de la vitre feuilletée. La longueur de la douille de montage de préférence cylindrique est adaptée à l'épaisseur de la vitre feuilletée respective, de telle façon qu'elle ne dépasse pas au-delà des faces de la vitre après sa mise en place dans le coussinet d'appui. Selon les possibilités, les faces d'extrémité de la douille de montage doivent affleurer à la surface des vitres.

Si l'on ne souhaite pas prévoir de douille de montage séparée, l'élément de fixation en forme de tige peut aussi être lui-même pourvu d'épaulements annulaires. L'écartement de ceux-ci doit alors de nouveau correspondre à l'épaisseur de la vitre feuilletée, de sorte qu'ils puissent transmettre des efforts (de serrage) apparaissant en direction axiale de élément de fixation.

Même si des ferrures de fixation sont à présent serrées par l'extérieur sur les faces de la vitre feuilletée dans la région du coussinet d'appui de l'élément de fixation, aucun effort de pression n'est exercé sur la vitre feuilletée elle-même. Les couches intercalaires de liaison ne peuvent pas être déformées. La transmission radiale des charges ne se fait que par les rondelles extérieures.

Une variante particulièrement avantageuse de la vitre feuilletée conforme à l'invention présente dans les vitres extérieures des trous avec des chanfreins. La vis à introduire dans le trou porte un contre-chanfrein correspondant. Les dimensions du chanfrein et du contre-chanfrein sont choisies de telle sorte que la tête de la vis se trouve au niveau de la surface de la vitre feuilletée. On obtient ainsi d'une part une apparence particulièrement esthétique de la vitre feuilletée, parce que la tête de la vis est pratiquement de niveau avec la surface externe de la vitre extérieure, et d'autre part la transmission de la charge par les vitres extérieures se fait avec des moments de flexion particulièrement faibles, parce que le point d'application de la charge se trouve près de la ligne médiane de la vitre.

Une autre possibilité d'une disposition affleurante de la tête de la vis et de la vitre extérieure consiste à munir un trou traversant pratiqué dans la vitre extérieure, sur la surface placée à l'extérieur, d'un trou fraisé cylindrique profond de plus grand diamètre. Le diamètre et la profondeur de ce trou profond correspondent largement aux dimensions de la tête de la vis, de sorte que cette dernière puisse être ajustée dans le creux du trou profond.

Dans une autre réalisation de la vitre feuilletée, il peut être avantageux de combler avec une masse durcissable, par exemple une résine de moulage, les espaces creux restant à l'intérieur de la vitre feuilletée après la mise en place des assemblages vissés, des bagues excentriques et de la douille de montage. D'une part, les assemblages vissés peuvent ainsi être bloqués, d'autre part la vitre feuilletée est rendue étanche à l'égard des influences atmosphériques, en particulier à l'égard de la pénétration d'humidité. De même, la capacité de charge mécanique du coussinet de montage peut être accrue, parce que la masse durcissable transmet les efforts et les moments appliqués vers les surfaces intérieures des trous des vitres individuelles. Dans ce cas, la rigidité est également accrue dans cette région du coussinet de montage, de sorte que des charges plus élevées sont possibles.

L'introduction de la masse durcissable se fait le plus judicieusement par des canaux dans la douille de montage, les rondelles excentriques et/ou les vis serrées dans les trous des vitres extérieures. Si un canal d'introduction ne débouche pas dans l'espace creux à combler, il faut un trou radial de communication vers le canal d'introduction. En plus d'un ou de plusieurs canaux d'introduction, il est dans la plupart des cas intéressant de prévoir aussi un canal d'échappement d'air, afin de garantir un remplissage rapide et complet de l'espace creux avec la masse durcissable. D'une manière judicieuse, le canal d'échappement d'air se trouve dans les pièces situées sur le côté de la vitre feuilletée faisant face au canal d'introduction. En guise de masse durcissable, des résines de moulage à deux composants se sont avérées intéressantes, parce que leur durée de durcissement est réglable. Les canaux peuvent être obturés avec des moyens séparés appropriés ou avec la masse durcie elle-même.

Les vitres individuelles de la vitre feuilletée pour une construction vitrée se composent en règle générale de verre de sécurité monolithique, qui est trempé ou partiellement trempé. Il entre cependant aussi dans le cadre de l'invention de faire usage de vitres individuelles en matière plastique ou en céramique. Les vitres individuelles peuvent en l'occurrence être transparentes, translucides ou opaques, ou encore être pourvues d'une coloration, d'un motif ou d'une couche réfléchissant les rayonnements électromagnétiques. En guise de matériau pour les couches de liaison, des polymères thermoplastiques, en particulier le polyvinyl butyral, se sont avérés intéressants. On peut cependant aussi utiliser pour cette application des matériaux connus comme le polyuréthane ou l'éthylène acétate de vinyle. Les couches de liaison peuvent également être dotées d'autres fonctions. Par exemple, des fils de chauffage peuvent être incorporés à une couche de liaison ou un film porteur avec un revêtement réfléchissant les rayonnements électromagnétiques peut être disposé entre deux films de liaison.

D'autres détails et avantages de l'objet de l'invention seront fournis par le dessin d'exemples de réalisation et par leur description détaillée qui suit.

Dans ces dessins, qui sont des représentations simplifiées :
- la figure 1 montre une vue d'un assemblage bord à bord de deux plaques ;
- la figure 2 est une représentation en coupe d'un élément d'assemblage inséré dans une plaque, constituant un détail tiré de la figure 1 ;
- la figure 3 est une vue de la face frontale de l'élément d'assemblage suivant la figure 2 à l'état monté ;
- la figure 4 est une vue d'un élément de compensation intérieur de l'élément d'assemblage, destinée à illustrer la disposition des canaux pour l'agent de scellement ;
- la figure 5 est une autre vue du même élément de compensation rabattu de 90° par rapport à la figure 4 ;
- la figure 6 montre une première forme de réalisation d'une vitre feuilletée coopérant avec un boulon à visser, représentée en coupe ; et
- la figure 7 illustre une seconde forme de réalisation avec l'espace creux scellé.

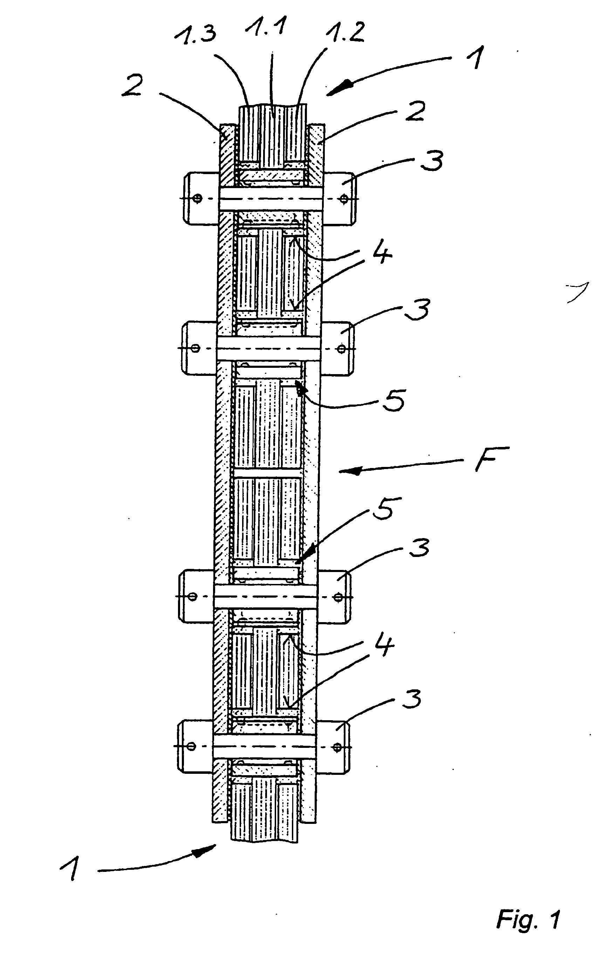

La figure 1 montre un assemblage bord à bord de deux plaques 1 situées en alignement, qui sont assemblées l'une à l'autre avec des ferrures 2. Les ferrures 2 réalisées sous forme de plaques de serrage sur les deux côtés sont chaque fois fixées aux plaques à l'aide de deux boulons (à visser) 3 traversant les plaques 1 et s'appliquent par une grande surface au moyen de couches intercalaires sur les faces principales de celles-ci, recouvrant ainsi le joint de contact F entre les plaques. Il en résulte une bonne transmission, au moyen des ferrures 2, des efforts exercés sur l'assemblage bord à bord.

Les plaques 1 elles-mêmes ont ici la forme de vitres feuilletées avec chacune trois vitres individuelles 1.1 (intérieure), 1.2 et 1.3 (extérieures) en plus des couches de collage correspondantes. A proximité de leurs côtés en contact l'un avec l'autre, elles présentent chacune deux alésages traversants 4, dans chacun desquels est inséré un élément d'assemblage 5. Ces derniers forment les passages proprement dits pour les boulons 3 et seront décrits plus en détail plus loin.

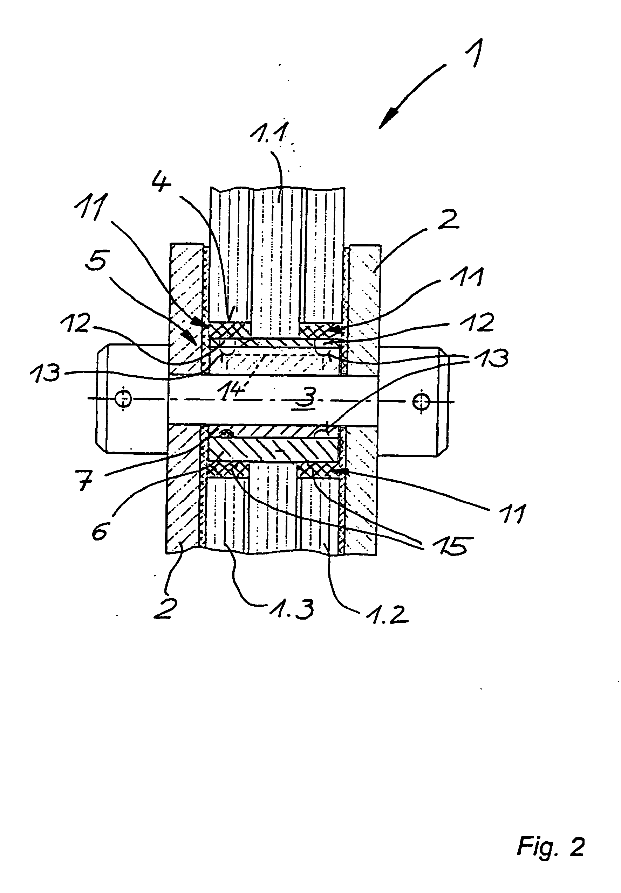

Dans la figure 2, on voit plus clairement que le trou dans la vitre individuelle intérieure 1.1 a un plus petit diamètre que les trous voisins dans les vitres individuelles extérieures 1.2 et 1.3. Par conséquent, l'alésage traversant 4 de la plaque 1 présente une surface latérale, respectivement une surface intérieure, étagée. Le plus grand diamètre intérieur de l'alésage 4 se trouve dans les régions de ses orifices de sortie dans les deux faces extérieures de la plaque 1. Grâce aux différentes grandeurs de trous, des tolérances relatives de position et de diamètre des trous dans les vitres individuelles sont compensées de façon simple. Pourtant, la position de l'axe central de l'alésage traversant 4 n'est pas définie ainsi de façon suffisante par rapport aux côtés de la plaque 1.

C'est à cela que sert au contraire l'élément d'assemblage 5 inséré dans l'alésage 4. Il est composé d'un élément de compensation extérieur 6 et d'un élément de compensation intérieur 7. Les deux ont essentiellement la forme d'une douille et ont la même longueur. Leurs longueurs sont adaptées aussi exactement que possible à l'épaisseur de la plaque 1. Leurs faces frontales lisses sont en alignement avec les deux faces principales de la plaque 1. Pour compenser d'éventuelles tolérances sur l'épaisseur des plaques, on ajustera la longueur des éléments d'assemblage à la plus petite épaisseur de plaque tolérée. Pour des plaques plus épaisses dans les limites des tolérances, il peut dès lors en résulter un léger sous-dimensionnement de l'élément d'assemblage.

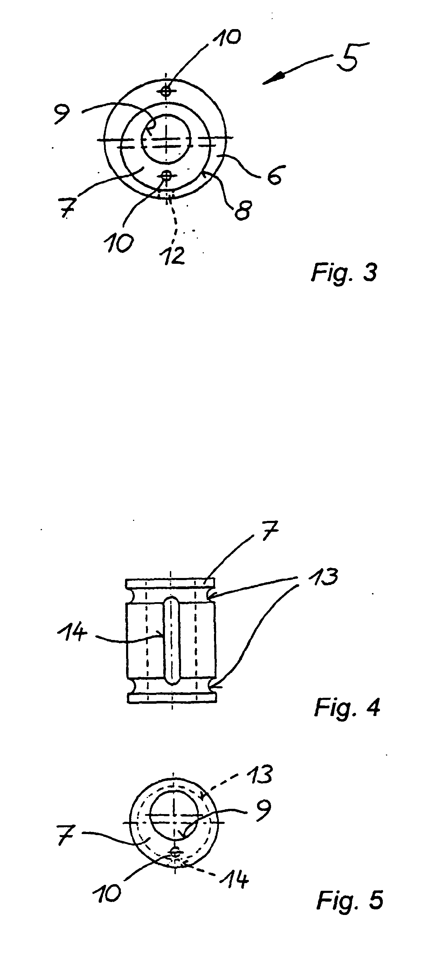

Comme on peut déjà le voir dans la figure 2 et comme cela est encore représenté plus clairement par la vue frontale de l'élément d'assemblage 5 dans la figure 3, les deux éléments de compensation 6 et 7 présentent chacun un alésage 8, respectivement un alésage de support 9 situé en position excentrée par rapport à leur axe longitudinal ou central. Dans l'alésage 8, on peut insérer avec un jeu aussi faible que possible l'élément de compensation intérieur cylindrique 7. Son alésage de support 9 reçoit le boulon 3 pratiquement sans jeu. L'élément d'assemblage 5 peut d'abord tourner en bloc à l'intérieur de l'alésage traversant 4, et l'élément de compensation intérieur 7 peut tourner librement par rapport à l'élément de compensation extérieur 6.

L'axe central de l'alésage de support 9 peut être positionné dans des limites très larges s'écartant d'une position moyenne théorique, en faisant tourner les deux éléments de compensation 6 et 7 l'un dans l'autre, respectivement à l'intérieur de l'alésage traversant 4, des marquages 10 sur les faces frontales des éléments de compensation 6 et 7 pouvant indiquer la position de la plus grande excentricité de l'alésage considéré. Ces marquages ne sont que des indications destinées à aider les monteurs.

L'élément de compensation extérieur cylindrique 6 a, comme on peut le voir dans les figures 1 et 2, environ le même diamètre que le trou dans la vitre intérieure 1.1. Il subsiste cependant, dans la région des trous des vitres extérieures 1.2 et 1.3, deux fentes annulaires libres 11. Chacune de ces fentes annulaires communique avec un alésage radial 12, qui relie la surface latérale de l'élément de compensation extérieur 6 avec son alésage excentré 8. Dans la surface latérale de l'élément de compensation intérieur 7 il est prévu, à nouveau en alignement avec la position des alésages radiaux 12, des rainures annulaires 13 qui sont reliées l'une à l'autre par une rainure courant longitudinalement 14. On pourrait également prévoir plus de deux alésages radiaux 12 dans l'élément de compensation extérieur 6, par exemple opposés l'un à l'autre par paires par rapport à l'alésage 8. On accentuerait ainsi un remplissage uniforme des rainures annulaires 13 avec l'agent de scellement.

La figure 4 illustre la disposition des rainures annulaires 13 et de la rainure 14 dans la surface latérale de l'élément de compensation intérieur 7. On pourrait naturellement prévoir également plus d'une rainure courant longitudinalement afin de diminuer la résistance à l'écoulement. De même, la figure 5 donne des indications concernant la disposition des rainures dans la surface latérale de l'élément de compensation 7.

Pour l'insertion dans l'alésage traversant 4, l'élément d'assemblage monté 5 est fixé de façon provisoire de préférence au moyen d'un tourillon auxiliaire d'un dispositif de montage non représenté ici, qui traverse et remplit entièrement son alésage de support 9. Ce tourillon auxiliaire a une position de référence fixe par rapport à au moins un côté de référence de la plaque, de sorte que l'axe central de l'alésage de support 9 de l'élément de compensation intérieur 7 vient se placer, respectivement est positionné, obligatoirement dans la position visée désirée à l'intérieur de l'alésage traversant 4.

L'élément d'assemblage 5 est fixé définitivement dans l'alésage traversant 4 au moyen d'un agent de scellement pâteux, coûtant et durcissable 15. A cet effet, suivant un procédé de montage avantageux, on dépose de part et d'autre, dans la région des orifices de sortie de l'alésage traversant 4, des plaques d'étanchéité sur la plaque 1, qui peuvent être réunies l'une à l'autre par le tourillon auxiliaire déjà mentionné. Celles-ci s'appliquent de façon étanche aussi bien sur les faces de la plaque que sur les faces frontales des deux éléments de compensation 6 et 7 et obturent ainsi vers l'extérieur les fentes annulaires 11. Une des plaques d'étanchéité est pourvue d'une ouverture de remplissage, qui communique avec une des fentes annulaires 11. L'autre plaque d'étanchéité est pourvue d'une ouverture d'échappement d'air et de contrôle, qui communique avec l'autre fente annulaire.

L'agent de scellement 15 est à présent introduit par l'extérieur dans la première fente annulaire 11 et il remplit d'abord complètement celle-ci. Sous l'effet de la gravité ou aussi sous pression, il parvient par le premier alésage radial 12 dans la première rainure annulaire 13, par la rainure courant longitudinalement 14 dans la seconde rainure annulaire 13, finalement par le second alésage radial 12 dans la seconde fente annulaire 11 située à l'opposé. Après que l'agent de scellement ait également rempli celle-ci, il sort finalement par l'ouverture d'échappement d'air relativement étroite. Cette sortie peut être surveillée et être utilisée comme indice du remplissage complet des fentes annulaires 11, des alésages 12 et des rainures 13, 14. Dans le dessin, figures 1 et 2, on a renoncé, uniquement par souci de clarté, à représenter l'agent de scellement aussi dans les alésages 12 et les rainures 13, 14.

Après le durcissement de l'agent de scellement 15, les plaques d'étanchéité et le tourillon auxiliaire sont enlevés, des excédents éventuels d'agent de scellement sont éliminés. L'élément d'assemblage est scellé en position stable dans l'alésage traversant 4 de la plaque 1, la position de l'axe central de l'élément de fixation en forme de tige est fixée clairement par rapport aux côtés de la plaque. Si l'on utilise des agents de scellement à durcissement endothermique, il peut être prévu un apport de chaleur directement par les plaques d'étanchéité du dispositif de montage.

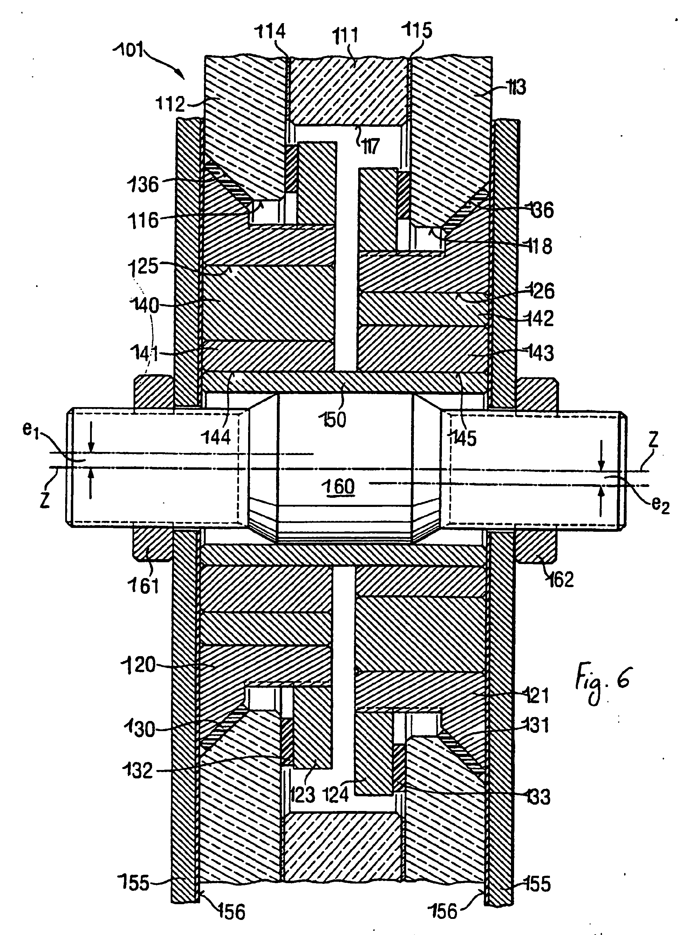

Suivant la figure 6, la vitre feuilletée 101 se compose d'une vitre centrale 111 partiellement trempée et de deux vitres extérieures 112 et 113 d'épaisseur sensiblement égale en verre de sécurité trempé. Les prescriptions relatives à la trempe partielle, respectivement la trempe, peuvent être trouvées par exemple dans les normes EN 1863, respectivement EN 12150. Les vitres extérieures 112 et 113 sont chacune assemblées à la vitre centrale 111 au moyen de couches adhésives constituées de films adhésifs thermoplastiques 114, respectivement 115. Les films adhésifs thermoplastiques 114 et 115 sont composés de polyvinyl butyral de 1,52 mm d'épaisseur. Dans les vitres individuelles 111, 112 et 113 se trouvent des trous 116, 117 et 118, qui forment un passage à travers la vitre feuilletée 101. Le trou 117 dans la vitre centrale possède en l'occurrence un plus grand diamètre que les trous 116 et 118, qui sont à leur tour pourvus d'un chanfrein en forme de tronc de cône 136 en direction des surfaces extérieures de la vitre feuilletée 101. Dans ces chanfreins en forme de tronc de cône 136, les têtes noyées des vis en forme de douille 120 et 121 pourvues d'alésages traversants 125 et 126 sont ajustées avec interposition de couches intermédiaires 130 et 131 et serrées avec les écrous 123 et 124. Les vis et les écrous sont représentés ici sans dispositifs pour l'application d'un outil. Entre les écrous 123 et 124 et les vitres extérieures 112 et 113 sont également disposées des couches intermédiaires 132 et 133. Les couches intermédiaires peuvent se composer d'une matière plastique comme le polyamide ou aussi d'un métal malléable, par exemple de l'aluminium malléable ou du cuivre. Elles servent à éviter des pressions superficielles dommageables entre les vitres et les assemblages vissés, qui sont en règle générale constitués d'un acier approprié.

Pour compenser le décalage axial entre les trous 116 et 118 respectivement les alésages traversants 125 et 126, deux paires de bagues excentriques 140 et 141 ainsi que 142 et 143 sont respectivement ajustées dans ceux-ci. Celles-ci sont réglables par rotation d'une façon telle qu'elles forment deux trous de montage ronds 144 et 145 de même diamètre alignés axialement avec le même centre Z; les excentricités e1 et e2 des trous 116 et 118 sont donc compensées par rapport à la ligne des centres Z.

Les paires de bagues excentriques se composent de deux bagues rondes ayant chacune un trou alésage. Les diamètres extérieurs des plus grandes bagues 141 et 143 correspondent aux alésages traversants 125 et 126, tandis que les diamètres extérieurs des plus petites bagues 140 et 142 correspondent au diamètre des alésages excentrés dans les plus grandes bagues 141 et 143. Les alésages excentrés dans les plus petites bagues forment enfin les trous de montage 144 et 145.

Dans les trous de montage 144 et 145 est disposée une douille 150 traversant la vitre feuilletée, qui sert à recevoir un boulon fileté en forme de tige 160 pouvant être assemblé à d'autres éléments de construction. Comme autres éléments de construction, on utilise des lames métalliques 155, qui sont fixées au boulon fileté au moyen de deux écrous 161 et 162 avec interposition de couches intermédiaires 156 en polyamide. Les lames 155 recouvrent la douille 150 et les bagues excentriques 140, 141, 142, 143 et limitent ainsi leur jeu axial. La dimension longitudinale de la douille 150 est choisie de telle manière qu'elle serve de pièce d'écartement pour l'assemblage boulonné du boulon fileté 160 avec les écrous 161/162, afin de ne pas exercer des efforts de pression sur la vitre feuilletée 101 et les assemblages vissés 120/124 et 121/123. La charge introduite par le boulon fileté 160 est transmise dans les vitres extérieures par les chanfreins tronconiques 136.

Les lames 155 peuvent être assemblées à une infrastructure, afin de fixer la vitre feuilletée 101. Il est cependant également possible, au moyen des lames 155, d'assembler plusieurs vitres feuilletées en alignement longitudinal sur de grandes longueurs. De même, la fixation des lames à une vitre feuilletée peut aussi être réalisée, selon la statique de l'ensemble de la construction, avec plusieurs boulons filetés, qui traversent à une distance déterminée l'un de l'autre des trous de montage dans la vitre feuilletée.

Les trous et les diamètres extérieurs des vis 120 et 121, des bagues excentriques 140, 141, 142 et 143, de la douille 150 ainsi que du boulon fileté 160 sont tous dimensionnés d'une manière telle qu'ils puissent être montés sans jeu.

La vitre feuilletée 101 est fabriquée de la façon suivante: en premier lieu, les assemblages vissés 120/124 et 121/123 doivent être installés sur les vitres extérieures 112 et 113. Les écrous 123 et 124 et les douilles filetées 120 et 121 sont à ce moment librement accessibles, de sorte que l'on peut garantir un serrage sûr et une application contrôlée de l'outil. Ensuite, les vitres individuelles 111, 112 et 113 sont réunies en un empilement de couches avec interposition des films adhésifs thermoplastiques 114 et 115 et assemblées en une vitre feuilletée 101 par application de chaleur et/ou de pression. Etant donné que la compensation axiale des alésages traversants 125 et 126 se fait ultérieurement à l'aide des bagues excentriques, la réunion des vitres peut ne se faire qu'avec un centrage grossier par rapport aux trous 116 et 118. La fabrication des vitres feuilletées s'en trouve nettement simplifiée. La compensation axiale des trous passants 125 et 126 peut être réalisée sur le chantier lors du montage de la vitre feuilletée 101. Il est cependant également possible d'insérer et d'aligner les bagues excentriques 140, 141, 142, 143 et la douille 150 dans les alésages traversants 125 et 126 déjà après l'assemblage des vitres individuelles 111, 112, 113 en une vitre feuilletée 101. Dans ce cas, il faut cependant assurer une fixation provisoire de ces composants au moyen d'une bande adhésive ou d'une colle, afin d'empêcher des glissements axiaux pendant le transport vers le chantier.

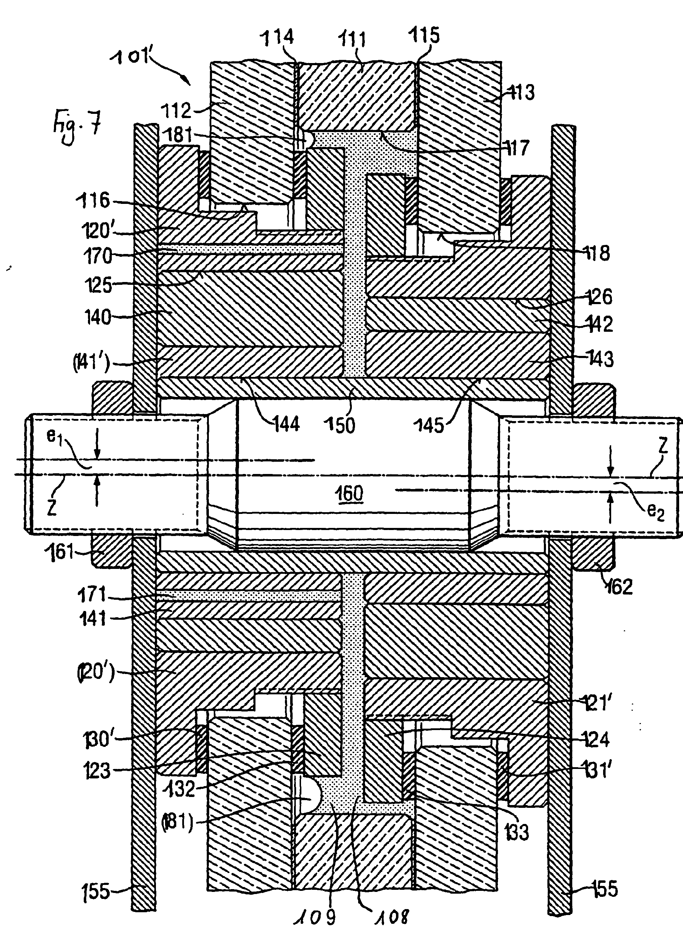

La représentation de la figure 7 correspond pour l'essentiel à celle de la figure 6, de sorte que l'on n'examinera que les différences. Les vis 120' et 121' s'appliquent dans ce cas sur les surfaces externes de la vitre feuilletée 101 par leurs têtes en saillie avec interposition de couches intermédiaires élastiques 130' et 131'. La vis 120' est pourvue d'un canal traversant 170 qui débouche dans un espace intermédiaire 108. Dans la bague excentrique 141' est pratiqué un canal 171, qui débouche également dans l'espace intermédiaire 108. Après l'introduction d'une résine de moulage 109 à travers les deux canaux 170 et 171, qui servent de conduite d'introduction et d'échappement d'air, tout l'espace intermédiaire 108 est rempli de résine de moulage. Pour l'introduction de la résine de moulage 109, la vitre feuilletée 101 est basculée sensiblement en position horizontale, de sorte que les deux canaux 170 et 171 soient dirigés vers le haut. La résine de moulage fluide 109 est alors versée par le canal 170, tandis que l'air déplacé peut s'échapper par le canal 171. L'espace intermédiaire 108 est ainsi presqu'entièrement rempli, seules de petites bulles d'air peuvent encore subsister dans l'angle 181 de l'espace intermédiaire 108. Après la réaction de la résine de moulage 109 en une masse solide, qui obture aussi les canaux 170 et 171, des charges peuvent également être transmises par la vitre centrale 111.

Si nécessaire, l'inclusion de bulles d'air dans l'angle 181 de l'espace intermédiaire 108 peut aussi être largement évitée, si les rondelles d'étanchéité 133 et 134 sont segmentées, donc pourvues de lignes d'interruption, et si des canaux d'échappement d'air sont usinés dans les écrous de serrage 123 et 124.

## Revendications

1. Elément d'assemblage (5) à insérer dans un alésage (4), en particulier dans un alésage traversant une plaque à plusieurs strates (1), par exemple une plaque de verre feuilletée, avec au moins un élément de compensation extérieur et un élément de compensation intérieur (6, 7), dans lequel l'élément de compensation extérieur est prévu pour transmettre des efforts à la surface intérieure du trou de l'alésage (4) et l'élément de compensation intérieur peut être inséré en ajustement serré dans un alésage (8) disposé de façon excentrique dans l'élément de compensation extérieur et est prévu pour positionner l'axe longitudinal d'un élément de fixation (3) à l'intérieur de l'alésage traversant (4), **caractérisé en ce que** l'élément d'assemblage (5) réalisé avec une dimension radiale plus petite par rapport à au moins une sortie de l'alésage (4) dans la face extérieure de la plaque (1) en vue de former une fente (11) peut être fixé dans cet alésage (4) au moyen d'un agent de scellement (15) remplissant ladite fente (11), lesdits éléments de compensation (6, 7) étant pourvus de canaux (12, 13, 14) au moins tangents au joint de séparation entre les deux éléments de compensation et pouvant être remplis de l'agent de scellement (15) après l'insertion de ces éléments de compensation dans l'alésage (4) de la plaque (1), et pouvant être fixés l'un par rapport à l'autre par durcissement de l'agent de scellement, après l'introduction de l'agent de scellement (15) dans les canaux.

2. Elément d'assemblage selon la revendication 1, **caractérisé en ce que** l'élément de compensation intérieur est solidement assemblé à un élément de fixation en forme de tige en saillie au moins d'un côté, dont l'axe longitudinal est disposé en position excentrée par rapport à l'axe longitudinal de l'élément de compensation.

3. Elément d'assemblage selon la revendication 1 ou 2, **caractérisé en ce que** l'élément de compensation intérieur (7) est pourvu d'un alésage de support excentrique (9) destiné à recevoir un élément de fixation en forme de tige (3).

4. Elément d'assemblage selon la revendication 3, **caractérisé en ce que** les canaux (12, 13, 14) ne communiquent pas avec l'alésage de support (9) de l'élément de compensation intérieur (7).

5. Elément d'assemblage selon l'une des revendications précédentes, **caractérisé en ce que** les canaux (12, 13, 14) établissent entre les deux portions de l'élément d'assemblage (5) situées dans les deux régions de sortie de l'alésage (4) traversant la plaque (1) une communication continue, qui emprunte ou qui touche en au moins un endroit le joint de séparation entre la surface intérieure du trou de l'élément de compensation extérieur (6) et la surface latérale de l'élément de compensation intérieur (7).

6. Elément d'assemblage selon l'une des revendications 1 à 4 qui précèdent, **caractérisé en ce que** les canaux établissent, entre deux ouvertures situées dans la région de sortie de l'alésage ménagé dans la plaque sous la forme d'un alésage borgne, une communication continue qui emprunte ou qui touche en au moins un endroit le joint de séparation entre la surface intérieure du trou de l'élément de compensation extérieur et la surface latérale de l'élément de compensation intérieur.

7. Elément d'assemblage selon la revendication 4 ou 5 ou 6, **caractérisé en ce que** les canaux (alésage 12) débouchent dans la surface latérale de l'élément de compensation extérieur (6).

8. Elément d'assemblage selon la revendication 7, **caractérisé en ce que** les orifices de sortie des canaux sont formés par des alésages radiaux (12), qui relient la surface latérale de l'élément de compensation extérieur (6) avec son alésage excentrique (8).

9. Elément d'assemblage selon la revendication 7 ou 8, **caractérisé en ce qu'**au moins un canal (14) est façonné dans la surface latérale de l'élément de compensation intérieur (7), qui relie fluidiquement les uns aux autres les canaux débouchant dans la surface latérale de l'élément de compensation extérieur (6).

10. Elément d'assemblage selon l'une des revendications précédentes, **caractérisé en ce que** deux rainures annulaires (13) et au moins une autre rainure (14), reliant les deux rainures annulaires, sont façonnées dans la surface latérale de l'élément de compensation intérieur (7).

11. Plaque (1) avec au moins un élément d'assemblage selon l'une des revendications 1 à 10, inséré dans un alésage, en particulier dans un alésage traversant (4) de la plaque, et fixé dans celui-ci par un agent de scellement (15) durci.

12. Plaque selon la revendication 11, **caractérisée en ce qu'**elle se compose,
comme plaque feuilletée, d'au moins trois feuilles (1.1, 1.2, 1.3) assemblées les unes aux autres, en particulier des vitres, dans laquelle l'alésage de chaque feuille intérieure (1.1) est plus étroit que les alésages dans les feuilles extérieures (1.2, 1.3), le diamètre extérieur de l'élément d'assemblage (5) correspond au moins approximativement au diamètre intérieur de l'alésage dans la feuille intérieure (1.1), et des fentes (11) prévues dans les deux régions de sortie de l'alésage traversant (4) entre la surface latérale extérieure de l'élément d'assemblage (5) et la surface intérieure du trou de la région de sortie considérée sont remplies de l'agent de scellement.

13. Assemblage entre au moins deux plaques selon l'une des revendications 11 ou 12 qui précèdent, comprenant des ferrures (2) recouvrant le joint bord à bord entre les plaques, qui sont fixées aux plaques individuelles (1) au moyen d'éléments de fixation (3) en forme de tige positionnés par des éléments d'assemblage (5) selon l'une des revendications 1 à 10.

14. Procédé pour fixer un élément d'assemblage selon l'une des revendications 1 à 10 dans un alésage traversant d'une plaque, alésage traversant qui présente au moins dans ses régions de sortie une dimension radiale plus grande par rapport à l'élément d'assemblage, **caractérisé en ce que** :
- au moyen d'un dispositif, on fixe dans l'alésage traversant la position de l'élément d'assemblage (5) avec les éléments de compensation (6, 7) alignés en bonne position pour le positionnement de l'axe longitudinal d'un élément de fixation (3) à l'intérieur de l'alésage traversant (4) et on obture les régions de sortie de l'alésage traversant (4) sur les deux côtés,
- on introduit par un côté de la plaque un agent de scellement, qui remplit d'abord un espace intermédiaire entre la surface latérale de la première sortie de l'alésage et l'élément d'assemblage, qui est ensuite conduit, en particulier pressé, à travers des canaux communiquant avec cet espace intermédiaire prévus à l'intérieur de l'élément d'assemblage, et qui remplit finalement un second espace intermédiaire entre la surface latérale de la seconde sortie de l'alésage et l'élément d'assemblage, l'arrivée de l'agent de scellement étant terminée après le remplissage du second espace intermédiaire, et
- on procède au durcissement de l'agent de scellement.

15. Procédé pour fixer un élément d'assemblage selon l'une des revendications 1 à 10 dans un alésage borgne d'une plaque, alésage borgne qui présente au moins dans sa région de sortie une dimension radiale plus grande par rapport à l'élément d'assemblage, **caractérisé en ce que** :
- au moyen d'un dispositif, on fixe dans l'alésage borgne la position de l'élément d'assemblage avec les éléments de compensation alignés en bonne position pour le positionnement de l'axe longitudinal d'un élément de fixation à l'intérieur de l'alésage borgne et on obture la région de sortie de l'alésage borgne,
- on introduit un agent de scellement, qui remplit d'abord un espace intermédiaire entre la surface latérale de la sortie de l'alésage et l'élément d'assemblage, qui est ensuite conduit, en particulier pressé, à travers des canaux communiquant avec cet espace intermédiaire, prévus à l'intérieur de l'élément d'assemblage et menant à une ouverture d'échappement et de sortie disposée dans la région de sortie de l'alésage borgne, l'arrivée de l'agent de scellement étant terminée après qu'il ait atteint l'ouverture de sortie, et
- on procède au durcissement de l'agent de scellement.

16. Procédé selon la revendication 14 ou la revendication 15, **caractérisé en ce que**, en cas d'utilisation d'un agent de scellement durcissant à chaud, on effectue un apport de chaleur au moyen du dispositif après le remplissage complet des espaces creux et des canaux.

## Claims

1. Assembly element (5) to be inserted into a bore (4), in particular into a bore passing through a plate having a plurality of strata (1), for example a laminated glass plate, with at least one outer compensating element and one inner compensating element (6, 7), wherein the outer compensating element is provided for transmitting forces to the inner surface of the hole of the bore (4) and the inner compensating element can be inserted with a close fit into a bore (8) arranged eccentrically in the outer compensating element and is provided for positioning the longitudinal axis of a fastening element (3) within the through-bore (4), **characterized in that** the assembly element (5), produced with a smaller radial dimension with respect to at least one exit of the bore (4) in the outer face of the plate (1) for the purpose of forming a slot (11), can be fastened in this bore (4) by means of a sealing agent (15) filling said slot (11), wherein said compensating elements (6, 7) are provided with ducts (12, 13, 14), which are at least tangent to the parting plane between the two compensating elements and which can be filled with the sealing agent (15) after the insertion of these compensating elements into the bore (4) of the plate (1), and can be fastened relative to one another as a result of the hardening of the sealing agent after the introduction of the sealing agent (15) into the ducts.

2. Assembly element according to Claim 1, **characterized in that** the inner compensating element is assembled firmly together with a rod-shaped fastening element which projects at least on one side and the longitudinal axis of which is arranged in an off-centred position with respect to the longitudinal axis of the compensating element.

3. Assembly element according to Claim 1 or 2, **characterized in that** the inner compensating element (7) is provided with an eccentric supporting bore (9) intended for receiving a rod-shaped fastening element (3).

4. Assembly element according to Claim 3, **characterized in that** the ducts (12, 13, 14) do not communicate with the supporting bore (9) of the inner compensating element (7).

5. Assembly element according to one of the preceding claims, **characterized in that** the ducts (12, 13, 14) establish, between the two portions of the assembly element (5) which are located in the two exit regions of the bore (4) passing through the plate (1), continuous communication which follows or touches at at least one point the parting plane between the inner surface of the hole of the outer compensating element (6) and the lateral surface of the inner compensating element (7).

6. Assembly element according to one of the preceding Claims 1 to 4, **characterized in that** the ducts establish, between two orifices located in the exit region of the bore made in the form of a blind bore in the plate, continuous communication which follows or touches at at least one point the parting plane between the inner surface of the hole of the outer compensating element and the lateral surface of the inner compensating element.

7. Assembly element according to Claim 4 or 5 or 6, **characterized in that** the ducts (bore 12) open at the lateral surface of the outer compensating element (6).

8. Assembly element according to Claim 7, **characterized in that** the exit ports of the ducts are formed by radial bores (12) which connect the lateral surface of the outer compensating element (6) to the eccentric bore (8) of the latter.

9. Assembly element according to Claim 7 or 8, **characterized in that** at least one duct (14) is made in the lateral surface of the inner compensating element (7) and fluidically connects to one another the ducts opening at the lateral surface of the outer compensating element (6).

10. Assembly element according to one of the preceding claims, **characterized in that** two annular grooves (13) and at least one other groove (14) connecting the two annular grooves are made in the lateral surface of the inner compensating element (7).

11. Plate (1) with at least one assembly element according to one of Claims 1 to 10 inserted into a bore, in particular into a through-bore (4) of the plate, and fastened in said bore by means of a hardened sealing agent (15).

12. Plate according to Claim 11, **characterized in that** it is composed, as a laminated plate, of at least three sheets (1.1, 1.2, 1.3) assembled together, in particular panes, wherein the bore of each inner sheet (1.1) is narrower than the bores in the outer sheets (1.2, 1.3), the outside diameter of the assembly element (5) corresponds at least approximately to the inside diameter of the bore in the inner sheet (1.1), and slots (11) provided in the two exit regions of the through-bore (4) between the outer lateral surface of the assembly element (5) and the inner surface of the hole of the exit region in question are filled with the sealing agent.

13. Assembly between at least two plates according to one of the preceding Claims 11 or 12, comprising fittings (2) which cover the edge-to-edge joint between the plates and which are fastened to the individual plates (1) by means of rod-shaped fastening elements (3) positioned by assembly elements (5) according to one of Claims 1 to 10.

14. Method for fastening an assembly element according to one of Claims 1 to 10 in a through-bore of a plate, said through-bore having, at least in its exit regions, a larger radial dimension with respect to the assembly element, **characterized in that**:
- by means of a device, the position of the assembly element (5) in the through-bore is fixed, with the compensating elements (6, 7) aligned in an exact position for the positioning of the longitudinal axis of a fastening element (3) within the through-bore (4), and the exit regions of the through-bore (4) are shut off on both sides,
- a sealing agent is introduced from one side of the plate and first fills an intermediate space between the lateral surface of the first exit of the bore and the assembly element, which sealing agent is subsequently conducted, in particular pressed, through ducts communicating with this intermediate space and provided within the assembly element and finally fills a second intermediate space between the lateral surface of the second exit of the bore and the assembly element, the ingress of the sealing agent being terminated after the filling of the second intermediate space, and
- the hardening of the sealing agent is carried out.

15. Method for fastening an assembly element according to one of Claims 1 to 10 in a blind bore of a plate, said blind bore having, at least in its exit region, a larger radial dimension with respect to the assembly element, **characterized in that**:
- by means of a device, the position of the assembly element in the blind bore is fixed, with the compensating elements aligned in an exact position for positioning the longitudinal axis of a fastening element within the blind bore, and the exit region of the blind bore is shut off,
- a sealing agent is introduced, which first fills an intermediate space between the lateral surface of the exit of the bore and the assembly element and is subsequently conducted, in particular pressed, through ducts which communicate with this intermediate space and are provided within the assembly element and which lead to an exhaust and outlet orifice arranged in the exit region of the blind bore, the ingress of the sealing agent being terminated after it has reached the exit orifice, and
- the hardening of the sealing agent is carried out.

16. Method according to Claim 14 or 15, **characterized in that**, when a hot-hardening sealing agent is used, a supply of heat is provided by means of the device after the complete filling of the hollow spaces and of the ducts.

## Patentansprüche

1. Verbindungselement (5) zum Einsetzen in eine Bohrung (4), insbesondere in eine eine mehrschichtige Platte (1), z. B. eine Verbundglasplatte, durchdringende Bohrung, mit mindestens einem äußeren und einem inneren Ausgleichselement (6, 7), wobei das äußere Ausgleichselement zum Übertragen von Kräften auf die Lochlaibung der Bohrung (4) vorgesehen ist, und das innere Ausgleichselement in eine im äußeren Ausgleichselement exzentrisch angeordnete Bohrung (8) passgenau einsetzbar und zum Positionieren der Längsachse eines Befestigungselements (3) innerhalb der Durchgangsbohrung (4) vorgesehen ist, **dadurch gekennzeichnet, dass** das mit radialem Untermaß zu mindestens einem Austritt der Bohrung (4) in die Außenfläche der Platte (1) zur Bildung eines Spalts (11) ausgeführte Verbindungselement (5) in dieser Bohrung (4) mittels eines den besagten Spalt (11) ausfüllenden Vergußmittels (15) festlegbar ist, wobei die Ausgleichselemente (6, 7) mit nach ihrem Einsetzen in die Bohrung (4) der Platte (1) mit dem Vergußmittel (15) auffüllbaren, die Teilfuge zwischen den beiden Ausgleichselementen zumindest tangierenden Kanälen (12, 13, 14) versehen und nach dem Einfüllen des Vergußmittels (15) in die Kanäle durch Aushärten des Vergußmittels gegeneinander festlegbar sind.

2. Verbindungselement nach Anspruch 1, **dadurch gekennzeichnet, dass** das innere Ausgleichselement fest mit einem wenigstens einseitig auskragenden schaftförmigen Befestigungselement verbunden ist, dessen Längsachse außermittig zur Längsachse des Ausgleichselements angeordnet ist.

3. Verbindungselement nach Anspruch 1 oder 2, **dadurch gekennzeichnet, dass** das innere Ausgleichselement (7) mit einer exzentrischen Lagerbohrung (9) zur Aufnahme eines schaftförmigen Befestigungselements (3) versehen ist.

4. Verbindungselement nach Anspruch 3, **dadurch gekennzeichnet, dass** die Kanäle (12, 13, 14) nicht mit der Lagerbohrung (9) des inneren Ausgleichselements (7) kommunizieren.

5. Verbindungselement nach einem der vorstehenden Ansprüche, **dadurch gekennzeichnet, dass** mittels der Kanäle (12, 13, 14) eine durchgehende Verbindung zwischen den beiden in den beiden Austrittsbereichen der die Platte (1) durchdringenden Bohrung (4) liegenden Abschnitten des Verbindungselements (5) geschaffen ist, welche Verbindung die Teilfuge zwischen der Lochlaibung des äußeren Ausgleichselements (6) und der Mantelfläche des inneren Ausgleichselements (7) an mindestens einer Stelle passiert oder tangiert.

6. Verbindungselement nach einem der vorstehenden Ansprüche 1 bis 4, **dadurch gekennzeichnet, dass** mittels der Kanäle eine durchgehende Verbindung zwischen zwei in dem Austrittsbereich der in die Platte als Sackbohrung eingebrachten Bohrung liegenden Öffnungen geschaffen ist, welche Verbindung die Teilfuge zwischen der Lochlaibung des äußeren Ausgleichselements und der Mantelfläche des inneren Ausgleichselements an mindestens einer Stelle passiert oder tangiert.

7. Verbindungselement nach Anspruch 4 oder 5 oder 6, **dadurch gekennzeichnet, dass** die Kanäle (Bohrung 12) in die Mantelfläche des äußeren Ausgleichselements (6) ausmünden.

8. Verbindungselement nach Anspruch 7, **dadurch gekennzeichnet, dass** die Mündungen der Kanäle durch radiale Bohrungen (12) gebildet sind, welche die Mantelfläche des äußeren Ausgleichselements (6) mit dessen exzentrischer Bohrung (8) verbinden.

9. Verbindungselement nach Anspruch 7 oder 8, **dadurch gekennzeichnet, dass** in die Mantelfläche des inneren Ausgleichselements (7) mindestens ein Kanal (14) eingeformt ist, welcher die in die Mantelfläche des äußeren Ausgleichselements (6) ausmündenden Kanäle fluidisch miteinander verbindet.

10. Verbindungselement nach einem der vorstehenden Ansprüche, **dadurch gekennzeichnet, dass** in die Mantelfläche des inneren Ausgleichselements (7) zwei Ringnuten (13) und mindestens eine weitere, die beiden Ringnuten verbindende Nut (14) eingeformt sind.

11. Platte (1) mit mindestens einem in eine Bohrung, insbesondere in eine Durchgangsbohrung (4) der Platte eingesetzten und darin durch ein ausgehärtetes Vergußmittel (15) festgelegten Verbindungselement nach einem der Ansprüche 1 bis 10.

12. Platte nach Anspruch 11, **dadurch gekennzeichnet, dass** sie als Verbundplatte aus mindestens drei miteinander verbundenen Scheiben (1.1, 1.2, 1.3), insbesondere Glasscheiben, besteht, wobei die Bohrung jeder innenliegenden Scheibe (1.1) enger als die Bohrungen in den außenliegenden Scheiben (1.2, 1.3) ist, der Außendurchmesser des Verbindungselements (5) dem Innendurchmesser der Bohrung in der innenliegenden Scheibe (1.1) wenigstens annähernd entspricht, und in beiden Austrittsbereichen der Durchgangsbohrung (4) vorgesehene Spalte (11) zwischen der äußeren Mantelfläche des Verbindungselements (5) und der Lochlaibung des jeweiligen Austrittsbereichs mit dem Vergußmittel ausgefüllt sind.

13. Verbindung wenigstens zweier Platten nach einem der vorstehenden Ansprüche 11 oder 12, umfassend die Stoßfuge zwischen den Platten überdeckende Beschläge (2), die an den einzelnen Platten (1) mittels durchVerbindungselemente (5) nach einem der Ansprüche 1 bis 10 positionierten schaftförmigen Befestigungselementen (3) festgelegt sind.

14. Verfahren zum Befestigen eines Verbindungselements nach einem der vorstehenden Ansprüche 1 bis 10 in einer Durchgangsbohrung einer Platte, welche Durchgangsbohrung zumindest in ihren Austrittsbereichen radiales Übermaß gegenüber dem Verbindungselement aufweist, **dadurch gekennzeichnet, dass**
- mittels einer Vorrichtung die Lage des Verbindungselements (5) mit den zum Positionieren der Längsachse eines Befestigungselements (3) innerhalb der Durchgangsbohrung (4) lagerichtig ausgerichteten Ausgleichselementen (6, 7) in der Durchgangsbohrung fixiert wird und die beidseitigen Austrittsbereiche der Durchgangsbohrung (4) abgedichtet werden,
- ein Vergußmittel von einer Seite der Platte her eingefüllt wird, welches zunächst einen Zwischenraum zwischen der Mantelfläche des ersten Bohrungsaustritts und dem Verbindungselement ausfüllt, dann durch mit diesem Zwischenraum kommunizierende, innerhalb des Verbindungselements vorgesehene Kanäle geführt, insbesondere gepresst wird und schließlich einen zweiten Zwischenraum zwischen der Mantelfläche des zweiten Bohrungsaustritts und dem Verbindungselement ausfüllt, wobei die Zufuhr des Vergußmittels nach Ausfüllen des zweiten Zwischenraums beendet wird, und
- das Vergußmittel ausgehärtet wird.

15. Verfahren zum Befestigen eines Verbindungselements nach einem der vorstehenden Ansprüche 1 bis 10 in einer Sackbohrung einer Platte, welche Sackbohrung zumindest in ihrem Austrittsbereich radiales Übermaß gegenüber dem Verbindungselement aufweist, **dadurch gekennzeichnet, dass**
- mittels einer Vorrichtung die Lage des Verbindungselements mit den zum Positionieren der Längsachse eines Befestigungselements innerhalb der Sackbohrung lagerichtig ausgerichteten Ausgleichselementen in der Sackbohrung fixiert wird und der Austrittsbereich der Sackbohrung abgedichtet wird,
- ein Vergußmittel eingefüllt wird, welches zunächst einen Zwischenraum zwischen der Mantelfläche des Bohrungsaustritts und dem Verbindungselement ausfüllt, dann durch mit diesem Zwischenraum kommunizierende, innerhalb des Verbindungselements vorgesehene und zu einer im Austrittsbereich der Sackbohrung angeordneten Entlüftungs- und Austrittsöffnung führende Kanäle geführt, insbesondere gepresst wird, wobei die Zufuhr des Vergußmittels nach Erreichen der Austrittsöffnung beendet wird, und
- das Vergußmittel ausgehärtet wird.

16. Verfahren nach Anspruch 14 oder Anspruch 15, **dadurch gekennzeichnet, dass** bei Verwendung eines wärmehärtenden Vergußmittels nach dem vollständigen Ausfüllen der Hohlräume und Kanäle eine Wärmezufuhr mittels der Vorrichtung erfolgt.
